# EUROPÄISCHE PATENTSCHRIFT

(11) **EP 3 950 430 B1**
(45) Veröffentlichungstag und Bekanntmachung des Hinweises auf die Patenterteilung: **17.05.2023**
(21) Anmeldenummer: 21189271.6
(22) Anmeldetag: 03.08.2021
(51) Int. Cl.: B60R 7/04, E05B 83/32, E05C 3/22

(54) **FAHRZEUGFACH MIT VERRIEGELBARER BEWEGLICHER ABDECKUNG**
VEHICLE COMPARTMENT WITH LOCKABLE MOVABLE COVER
COMPARTIMENT DE VÉHICULE POURVU DE RECOUVREMENT MOBILE POUVANT ÊTRE VERROUILLÉ

(30) Priorität: 05.08.2020 DE 102020120623
(43) Veröffentlichungstag der Anmeldung: 09.02.2022
(73) Patentinhaber: Lisa Dräxlmaier GmbH, 84137 Vilsbiburg (DE)
(72) Erfinder: Tarjanyi, Levente, 6723 Szeged (HU); Keresztury, Gabor, 6900 Makó (HU); Paradi, Attila, 3133 Magyargéc (HU)

(56) Entgegenhaltungen:
- DE-A1-102005 001 607
- DE-U1-202011 108 008
- US-A- 5 598 613

## Beschreibung

### Technisches Gebiet

Die vorliegende Erfindung betrifft ein Fahrzeugfach mit einer Beschickungsöffnung, die mittels einer beweglichen Abdeckung abdeckbar ist, und mit einem manuell betätigbaren Verriegelungsmechanismus zur Verriegelung der Abdeckung in ihrer die Beschickungsöffnung abdeckenden Schließposition, wobei der Verriegelungsmechanismus einen beweglichen Druckknopf, ein durch Verschiebung des Bewegungsübertragungselements entriegelbares Verriegelungselement und ein elastisches Rückstellelement aufweist. Die vorliegende Erfindung betrifft auch ein Fahrzeug mit mindestens einem solchen Fahrzeugfach. Die vorliegende Erfindung betrifft ferner ein Verfahren zum Öffnen einer an einem Fahrzeugfach lösbar verriegelbaren Abdeckung, bei dem ein Druckknopf durch äußere Kraftaufbringung aus seiner Ruhestellung bewegt wird, durch die Verschiebung mindestens ein elastisch verformbares Rückstellelement linear ausgelenkt wird und ein Verriegelungselement in eine Entriegelungsstellung bewegt wird. Das Verfahren kann analog zu dem Fahrzeugfach ausgebildet werden und ergibt die gleichen Vorteile.

### Stand der Technik

Es sind Fahrzeugfächer der betreffenden Art bekannt, bei denen ein Rückstellelement in Form einer Schraubendruckfeder bei manuellem Eindrücken des Druckknopfs aus seiner Ruhestellung linear zusammengedrückt wird. Bei Beendigung der Betätigung dehnt sich die Schraubendruckfeder wieder aus und drückt den Druckknopf zurück in seine Ruhestellung. Hierbei ist nachteilig, dass der Bediener des Druckknopfs keine deutliche taktile Rückmeldung von dem Verriegelungsmechanismus erhält und daher den Druckknopf häufig weiter eindrückt als nötig.

US 3,699,296 offenbart einen Schnappschalter und -aktuator einer elektrischen Schaltung, bei dem ein elastisches säulenförmiges Kompressionselement axial bis zu einem Punkt eines katastrophalen Knickens belastet wird. In einer Ausführungsform dient die Säule sowohl als elektrischer Leiter als auch als Kontakt und knickt in Kontakt mit einem anderen elektrisch leitenden Element ein, um einen Schalter der elektrischen Schaltung zu schließen. Alternativ kann die geknickte Säule eine piezoelektrische, optische oder andere Signalerzeugungseinrichtung betätigen, um Signale zu erzeugen, die zum Schalten oder Schließen anderer Kontakte der elektrischen Schaltung verwendet werden.

Das Dokument DE 10 2005 001 607 offenbart ein Fahrzeugfach mit einer Beschickungsöffnung und einem Verriegelungsmechanismus, wobei der Verriegelungsmechanismus einen beweglichen Druckknopf, ein durch den Druckknopf verschiebbares Bewegungsübertragungselement, ein durch Verschiebung des Bewegungsübertragungselements entriegelbares Verriegelungselement und ein elastisches Rückstellelement aufweist.

### Beschreibung der Erfindung

Eine Aufgabe der Erfindung ist es daher, ein Fahrzeugfach der betreffenden Art bereitzustellen, das unter Einsatz konstruktiv möglichst einfacher Mittel eine merkliche taktile Rückmeldung während eines Eindrückens des Druckknopfs aus seiner Ruhestellung bereitstellt.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein erfindungsgemäßes Fahrzeugfach weist eine Beschickungsöffnung, die mittels einer beweglichen Abdeckung abdeckbar ist, auf. Die Abdeckung weist einen manuell betätigbaren Verriegelungsmechanismus zur Verriegelung der Abdeckung in ihrer die Beschickungsöffnung abdeckenden Schließposition auf. Der Verriegelungsmechanismus weist einen beweglichen Druckknopf, ein durch den Druckknopf verschiebbares Bewegungsübertragungselement (im Folgenden auch einfach nur als "Bewegungsübertrager" bezeichnet), ein durch Verschiebung des Bewegungsübertragungselements entriegelbares Verriegelungselement und ein elastisches Rückstellelement auf, wobei das elastische Federelement mindestens zwei Federarme aufweist, von denen mindestens ein erster Federarm bei Bewegung des Bewegungsübertragungselements ausschließlich linear auslenkbar ist und von denen mindestens ein zweiter Federarm so ausgestaltet ist, dass das Bewegungsübertragungselement bei Bewegung aus seiner Ruhestellung zunächst auf dem mindestens einen zweiten Federarm unter dessen linearer Auslenkung gleitet und mit Erreichen einer vorgegebenen Bewegungsstrecke über den mindestens einen zweiten Federarm hinweggleitet.

Dieses Fahrzeugfach weist den Vorteil auf, dass mit Erreichen der vorgegebenen Bewegungsstrecke (auch als Verschiebungsweg bezeichenbar) durch eine deutlich erkennbare Verringerung der entgegenwirkenden Federkraft eine merklich verbesserte taktile Rückmeldung an einen Bediener des Fahrzeugfachs ausgegeben wird. Der Verriegelungsmechanismus ist ferner mechanisch einfach und preiswert umsetzbar und zudem besonders robust und langlebig.

Die Verschiebung des Bewegungsübertragungselements bewirkt die lineare elastische Dehnung des mindestens einen ersten Federarms, die also einen mit Verschiebung des Bewegungsübertragungselements linear ansteigenden Anteil an der entgegenwirkenden Federkraft bewirkt. Dass ein erster Federarm ausschließlich linear auslenkbar ist, umfasst folglich insbesondere, dass der erste Federarm über die gesamte Bewegungsstrecke des Bewegungsübertragungselements eine mit steigender Bewegungsstrecke zumindest ungefähr linear erhöhende elastische (Feder-)Gegenkraft aufbaut. Der Anteil der durch den mindestens einen zweiten Federarm bewirkten Federkraft steigt, wie bereits oben beschrieben, bis zum Erreichen des Knickbereichs ebenfalls linear ab, und fällt innerhalb des Knickbereichs auf null ab und bleibt bei noch weiterer Verschiebung des Bewegungsübertragungselements bei null.

Die Verringerung der Federkraft wird dadurch bewirkt, dass das Bewegungsübertragungselement vor Erreichen der vorgegebenen Bewegungsstrecke auf dem zweiten Federarm gleitet und dabei eine - insbesondere zumindest ungefähr lineare - Gegenkraft erfährt, die z.B. durch Schrägstellung des zweiten Federarms gegen die Bewegungsrichtung des Bewegungsübertragungselement und ggf. durch Gleitreibung während der Gleitbewegung erzeugt wird. Ist mit Erreichen der vorgegebenen Bewegungsstrecke das Ende des zweiten Federarms erreicht, hat das Bewegungsübertragungselement den mindestens einen zweiten Federarm aus seinem Bewegungspfad gedrückt und erfährt ab da keine Gegenkraftdurch den zweiten Federarm mehr. Dadurch kommt es zu einem Kraftabfall in der Federkraft des Rückstellelements. Theoretisch findet der Kraftabfall zu einem bestimmten Zeitpunkt instantan statt, in der Praxis jedoch innerhalb eines kurzen (z.B. 0,5 mm bis 1 mm dauernden) Bereichs der Bewegungsstrecke (des sog. "Knickbereichs").

Das Fahrzeugfach kann ein Handschuhfach, ein in einer Mittelkonsole befindliches Fahrzeugfach, ein in einer Armlehne befindliches Fahrzeugfach, usw. sein.

Befindet sich die Abdeckung in ihrer Schließposition, deckt sie die Beschickungsöffnung ab. Ansonsten befindet sich die Abdeckung in einer Öffnungsposition. Die Abdeckung kann auch als Deckel bezeichnet werden.

Die Abdeckung wird mittels des Verriegelungsmechanismus in ihrer Schließposition gehalten, wenn sich der Druckknopf in seiner Ruhestellung befindet. In der Ruhestellung ist der Druckknopf nicht betätigt bzw. es wird keine äußere Kraft auf den Druckknopf ausgeübt. Dann befindet sich auch das Verriegelungselement in seiner Verriegelungsstellung und greift bei geschlossener Abdeckung in das Fahrzeugfach ein, z.B. in einen die Beschickungsöffnung aufweisenden Korpus desselben. Dieser Eingriff kann kraftschlüssig und/oder - vorteilhafterweise - formschlüssig erfolgen. Dies kann auch so ausgedrückt werden, dass die Abdeckung mittels des Verriegelungsmechanismus an dem Fahrzeugfach verriegelbar ist. Zur Öffnung der Abdeckung aus ihrer Schließstellung wird der Verriegelungsmechanismus durch Drücken oder Bewegen des Druckknopfs entriegelt. Mit Bewegung des Druckknopfs in Eindrückrichtung verschiebt dieser das Bewegungsübertragungselement. Das Bewegungsübertragungselement bewegt, insbesondere dreht, das Verriegelungselement in Richtung seiner Entriegelungsstellung, in dem sich das Verriegelungselement in Ausgriff mit dem Fahrzeugfach befindet oder gelangt. Die Abdeckung kann nun in eine Öffnungsposition aufklappen oder aufgleiten, insbesondere manuell geöffnet und/oder geschlossen werden und/oder kraftunterstützt geöffnet und/oder geschlossen werden.

Es ist eine Weiterbildung, dass sich das Verriegelungselement mit Erreichen der vorgegebenen Bewegungsstrecke in seiner Entriegelungsstellung befindet. So lässt sich durch die Verringerung der der Bewegung entgegenwirkenden Federkraft eine taktile Rückmeldung darüber geben, dass die Entriegelungsstellung erreicht worden ist und die Abdeckung angehoben werden kann. Die Entriegelungsstellung wird also zumindest ungefähr dann eingenommen, wenn die vorgegebene Bewegungsstrecke erreicht worden ist.

Es ist eine Ausgestaltung, dass das Verriegelungselement ein durch Bewegen des Druccknopfs drehbarer Haken ist. Es kann alternativ z.B. ein drehbarer oder linear verschiebbarer Riegel, Bolzen usw. sein. Es ist eine Weiterbildung, dass das Verriegelungselement in seiner Entriegelungsstellung ganz in dem Deckel untergebracht ist.

Es ist eine Ausgestaltung, dass das elastische Rückstellelement zwei in Bezug auf die Bewegungsrichtung des Bewegungsübertragungselement seitlich links und rechts vorstehende erste Federelemente aufweist. Dadurch wird vorteilhafterweise eine geometrisch besonders gleichmäßige Aufgabe der Federkraft auf das Bewegungsübertragungselement bewirkt.

Es ist eine Ausgestaltung, dass der mindestens eine zweite Federarm einen bei Einschubbewegung in Bewegungsrichtung vorstehenden Federarm aufweist, der an seinem freien Ende einen in Bezug auf die Bewegungsrichtung unter einem stumpfen Winkel schräg vorstehenden Endbereich aufweist, wobei das Bewegungsübertragungselement bis zum Erreichen der vorgegebenen Bewegungsstrecke auf dem Endbereich gleitet und mit Erreichen der vorgegebenen Bewegungsstrecke über den freien Rand des Endbereichs hinweggleitet. Der Endbereich taucht mit Erreichen der vorgegebenen Bewegungsstrecke also unter das Bewegungsübertragungselement ab und befindet sich nicht mehr im weiteren Bewegungspfad des Bewegungsübertragungselements. Diese Ausgestaltung ist besonders einfach umsetzbar, ermöglicht eine ruckfreie Bewegung des Bewegungsübertragungselements, ermöglicht eine besonders hohen Anteil der Gegenkraft gegen die Bewegung des Bewegungsübertragungselements und einen besonders gut einstellbaren Knickbereich. Es ist eine Weiterbildung, dass das Bewegungsübertragungselement in seiner Ruhestellung am Übergang zum Endbereich auf dem zweiten Federelement aufliegt. Die Gleitbewegung wird in diesem Fall aus der Ruhestellung bis zum Knickbereich durch Gleiten auf dem Endbereich bestimmt.

Es ist eine Ausgestaltung, dass der zweite Federarm im Ruhezustand in Richtung des Endbereichs bzw. des Bewegungsübertragungselements hochgebogen ist. Dies ergibt den Vorteil, dass eine Biegung des zweiten Federarms definiert einstellbar ist, die dazu dient, einen linearen Anteil der Federkraft des Rückstellelements zu erzeugen, und zudem der Knickbereich durch zuverlässiges Abtauchen des zweiten Federarms unter das Bewegungsübertragungselement besonders zuverlässig erreicht wird.

Es ist eine Ausgestaltung, dass das elastische Rückstellelement mindestens einen dritten Federarm aufweist, der das Verriegelungselement kontaktiert und dazu vorgesehen ist, mit Entriegelung des Verriegelungselements durch dieses ausgelenkt zu werden und dann das Verriegelungselement zurück in seine Ruhestellung zu drängen. Dadurch lässt sich das Verriegelungselement zuverlässig in seine Ruhe/Eingriffsstellung zurückbewegen. Außerdem lässt sich so ein weiterer linearer Anteil der Federkraft des Rückstellelements erzeugen.

Es ist eine Ausgestaltung, dass das Rückstellelement einen zentralen Bereich aufweist, von dem die Federarme abgehen. Dies ermöglicht vorteilhafterweise eine besonders einfache Herstellung des Rückstellelements.

Es ist eine Ausgestaltung, dass der zentrale Bereich eine Fixierungsöffnung zur Befestigung des Rückstellelements aufweist. Dies ergibt den Vorteil, dass das Rückstellelement einfach und zuverlässig in bzw. an der Abdeckung fixierbar ist. Der zentrale Bereich an der Fixierungsöffnung z.B. mit der Abdeckung verrastet, verklebt, usw. werden.

Es ist eine Ausgestaltung, dass das Federelement aus einem Metallblech einstückig hergestellt ist. Dies kann auch als "Federblatt" bezeichnet werden. Alternativ kann das Rückstellelement z.B. aus Kunststoff gefertigt sein, z.B. als ein Spritzgusselement.

Es ist eine Ausgestaltung, dass der Druckknopf und das Bewegungsübertragungselement separat hergestellte Komponenten sind. Dadurch wird es vorteilhafterweise ermöglicht, deren Bewegungsrichtungen zu entkoppeln, so dass sie entweder genau übereinstimmen oder zumindest ungefähr übereinstimmen, z.B. leicht (+/- 5°) gegeneinander angewinkelt sind. Außerdem wird so eine Montage erleichtert, da das Bewegungsübertragungselement in der Abdeckung vormontiert werden kann. Auch wird so vorteilhafterweise ein mögliches Verkanten des Bewegungsübertragungselements in der Abdeckung besonders effektiv verhindert.

Alternativ können der Druckknopf und das Bewegungsübertragungselement als eine einzige Komponente vorliegen, insbesondere als eine einstückig hergestellte Komponente.

Die Aufgabe wird auch gelöst durch ein Fahrzeug mit mindestens einem solchen Fahrzeugfach. Das Fahrzeug kann ein Kraftfahrzeug (z.B. ein Kraftwagen wie ein Personenkraftwagen, Lastkraftwagen, Bus usw. oder ein Motorrad), eine Eisenbahn, ein Wasserfahrzeug (z.B. ein Boot oder ein Schiff) oder ein Luftfahrzeug (z.B. ein Flugzeug oder ein Hubschrauber) sein.

Die Aufgabe wird ferner gelöst durch ein Verfahren zum Öffnen einer an einem Fahrzeugfach lösbar verriegelbaren Abdeckung, bei dem ein Druckknopf durch äußere Kraftaufbringung aus seiner Ruhestellung bewegt wird und dadurch ein Bewegungsübertragungselement verschiebt, durch die Verschiebung des Bewegungsübertragungselements mindestens ein erster elastischer Federarm eines Rückstellelements linear ausgelenkt wird und ein Verriegelungselement in eine Entriegelungsstellung bewegt wird, und bei dem durch die Bewegung des Bewegungsübertragungselements mindestens ein zweiter Federarm bis zum Erreichen einer vorgegebenen Bewegungsstrecke des Bewegungsübertragungselements von seiner Ruhestellung aus linear ausgelenkt und mit Erreichen der vorgegebenen Bewegungsstrecke überglitten wird. Das Verfahren kann analog zu dem Fahrzeugfach ausgebildet werden und ergibt die gleichen Vorteile.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: zeigt in Ansicht ein Fahrzeugfach von schräg oben;
- Figur 2: zeigt in Ansicht einen Ausschnitt aus dem Fahrzeugfach mit oberseitig aufgeschnittenem Deckel mit Blick auf einen Verriegelungsmechanismus, der ein Federblatt aufweist, von schräg oben;
- Figur 3: zeigt in Ansicht einen weiteren Ausschnitt aus dem Fahrzeugfach mit oberseitig aufgeschnittenem Deckel von schräg oben;
- Figur 4: zeigt das Federblatt in Ansicht von schräg oben;
- Figur 5: zeigt einen Kraftverlauf einer durch das Federblatt erzeugten Gegenkraft bei Betätigung des Verriegelungsmechanismus;
- Figuren 6 bis 9: zeigen als Schnittdarstellung in Seitenansicht einen Ausschnitt aus dem Fahrzeugfach unter unterschiedlichen Betätigungszuständen.

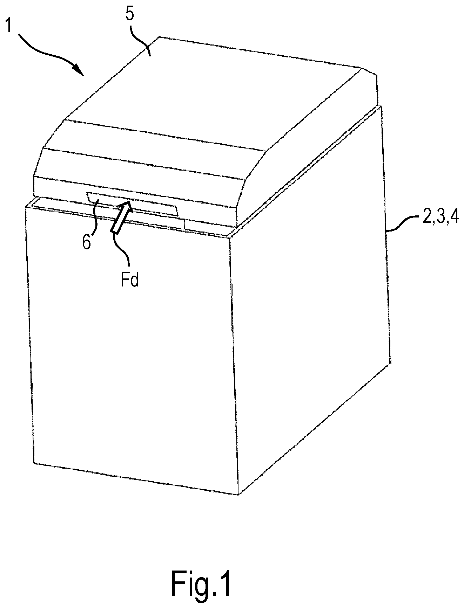

Figur 1 zeigt in Ansicht von schräg oben ein Fahrzeugfach 1 mit einem Korpus 2, in dem ein Lagerfach 3 zur Aufnahme von Gegenständen ausgebildet ist. Das Fahrzeugfach 1 kann z.B. in einer Mittelkonsole eines Kraftwagens verbaut sein.

Das Lagerfach 3 weist eine hier oberseitige Beschickungsöffnung 4 auf, die mittels einer Abdeckung oder Deckels 5 abdeckbar ist. Der verschwenkbare Deckel 5 ist in seiner die Beschickungsöffnung 4 abdeckenden Schließposition gezeigt und ist dabei gegen den Korpus 2 verriegelt. Zu seiner Entriegelung kann ein hier frontseitig aus dem Deckel 5 vorstehender Druckknopf 6 aus seiner Ruhestellung in den Deckel 5 z.B. manuell eingedrückt werden, wobei eine äußere Kraft oder Eindrückkraft Fd auf den Druckknopf 6 ausgeübt wird.

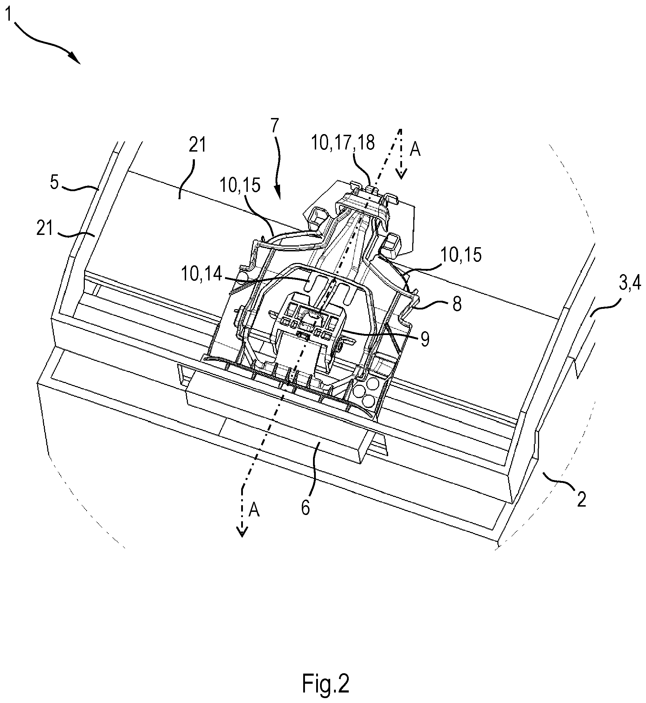

Figur 2 zeigt in Ansicht von schräg oben einen Ausschnitt aus dem Fahrzeugfach 1 mit oberseitig aufgeschnittenem Deckel 5 mit Blick auf einen Verriegelungsmechanismus 7. Der Verriegelungsmechanismus 7 weist einen an dem Deckel 5 linear beweglich angebrachten, aufgeschnitten gezeigten Bewegungsübertrager 8 auf, welcher durch Bewegung des Druccknopfs 6 verschiebbar ist (wie durch den Doppelpfeil angedeutet) und durch den Deckel 5 geführt wird.

Der Verriegelungsmechanismus 7 weist außerdem ein Verriegelungselement in Form eines drehbar gelagerten Hakens 9 auf, der bei der Eindrückbewegung des Druckknopfs 6 aus einem formschlüssigen Eingriff mit dem Korpus 2 in eine Entriegelungsstellung gedreht wird, in der er sich in Ausgriff mit dem Korpus 2 befindet.

Der Verriegelungsmechanismus 7 weist ferner ein elastisches Element in Form eines Federblatts 10 auf, das bei der Eindrückbewegung des Druckknopfs 6 sowie durch Drehung des Hakens 9 elastisch deformiert wird und dadurch eine Federkraft Fs aufbaut, welche der Eindrückbewegung eine Gegenkraft entgegensetzt. Bei Freigabe des Druckknopfs 6 drängt das Federblatt 10 den Bewegungsübertrager 8 (und damit auch den Druckknopf 6) und den Haken 9 zurück in ihre Ruhestellungen.

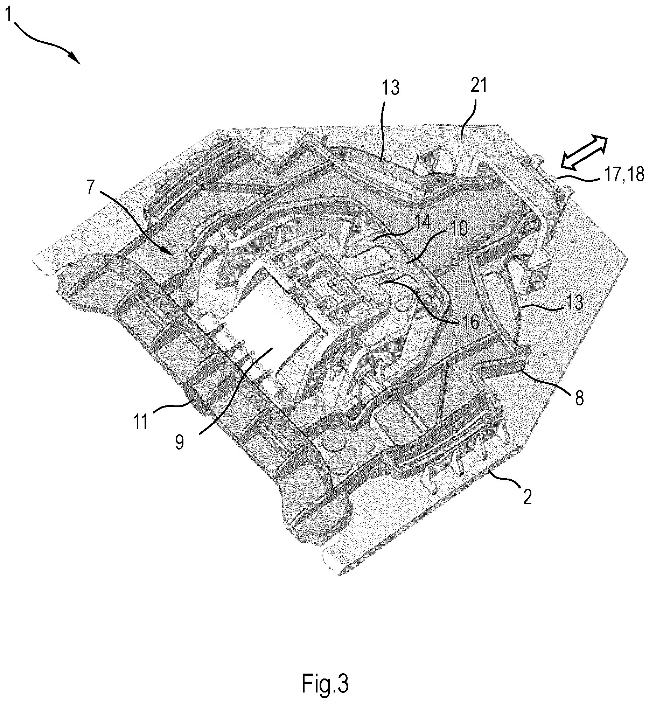

Figur 3 zeigt in Ansicht von schräg oben einen weiteren Ausschnitt aus dem Fahrzeugfach 1 mit oberseitig aufgeschnittenem Deckel 5, wobei nun der Bewegungsübertrager 8 nicht aufgeschnitten gezeigt ist. Das Federblatt 10 wird durch den Bewegungsübertrager 8 teilweise abgedeckt. An einer dem Druckknopf 6 zugewandten (vorderen) Seite weist der Bewegungsübertrager 8 ein elastisches Aufprallelement 11 auf, das einen harten Aufprall des Druckknopfs 6 auf den Bewegungsübertrager 8 bei Eindrücken des Druckknopfs 6 verhindert.

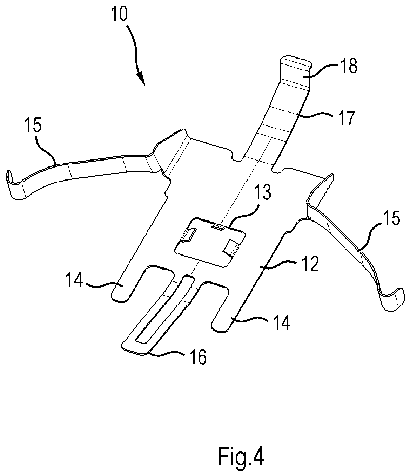

Figur 4 zeigt das Federblatt 10 in Schrägansicht. Das Federblatt 10 weist einen hier weitgehend ebenen zentralen Bereich 12 mit einer Fixierungsöffnung 13 auf, mittels welcher der zentrale Bereich 12 an dem Deckel 5 ortsfest, insbesondere praktisch unbeweglich gehalten wird. Dazu können optional zwei (Einsteck-)Laschen 14 vorhanden sein, welche beispielsweise zur einfachen Montage des Federblatts 10 in den Deckel 5 oder in den Bewegungsübertrager 8 einsteckbar sind und dann der zentrale Bereich 12 an seiner Fixierungsöffnung 13 mit dem Deckel 5 verrastbar ist.

Von dem zentralen Bereich 12 gehen mehrere weitere Laschen oder Arme ab, nämlich zwei in Bezug auf eine Eindrückrichtung des Druckknopfs 6 bzw. eine entsprechende Bewegungsrichtung des Bewegungsübertragers 8 seitlich abgehende ("erste") Federarme 15, einen rückwärtigen ("zweiten") Federarm 17, der an seinem freien Ende einen hochgebogenen Endbereich 18 aufweist, und einen vorderseitigen ("dritten") Federarm 16. Das Federblatt 10 ist hier bezüglich einer Mittelachse spiegelsymmetrisch ausgebildet.

Die beiden Federarme 15 dienen als Rückstellelemente, welche bei Bewegung des Bewegungsübertragers 8 (nach hinten) von diesem gebogen oder ausgelenkt werden und dadurch der Eindrückbewegung des Bewegungsübertragers 8 eine zumindest ungefähr lineare elastische Gegenkraft entgegensetzen.

Der Federarm 16 dient als Rückstellelement gegen eine Drehbewegung des Hakens 9 und weist ebenfalls eine zumindest ungefähr lineare elastische Kraftcharakteristik auf. Der Federarm 16 ist hier beispielhaft leicht nach oben (d.h., in Richtung des Bewegungsübertragers 8 bzw. weg von einer Auflagefläche des zentralen Bereichs 12) gebogen.

Wird der Druckknopf 6 nicht mehr betätigt (Eindrückkraft Fd = 0), drücken die Federarme 15 den Bewegungsübertrager 8 und den Druckknopf 6 zurück in ihre Ruhestellung, während der Federarm 16 den Haken 9 in seine Schließstellung zurückdreht.

Der Federarm 17 bewirkt im Gegensatz dazu bei Bewegung des Bewegungsübertragers 8 in Eindrückrichtung eine nicht-lineare Kraftcharakteristik auf, wie weiter unten genauer erklärt wird. Dazu ist er leicht nach oben gebogen, und der an seinem freien Ende hochgebogene Endbereich 18 steht vorteilhaft nicht senkrecht hoch, sondern leicht schräg nach hinten. Dadurch wird erreicht, dass der Bewegungsübertrager 8 in Eindrückrichtung entlang des Endbereichs 18 gleiten kann und sich nicht verhakt oder blockiert wird.

Das Federblatt 10 ist besonders einfach herstellbar, z.B. einstückig aus einem Metallblech, z.B. aus Federstahl. Das Federblatt 10 ist zudem robust und einfach montierbar, wobei insbesondere Fehler im Verlauf der Montage einfach vermieden werden können.

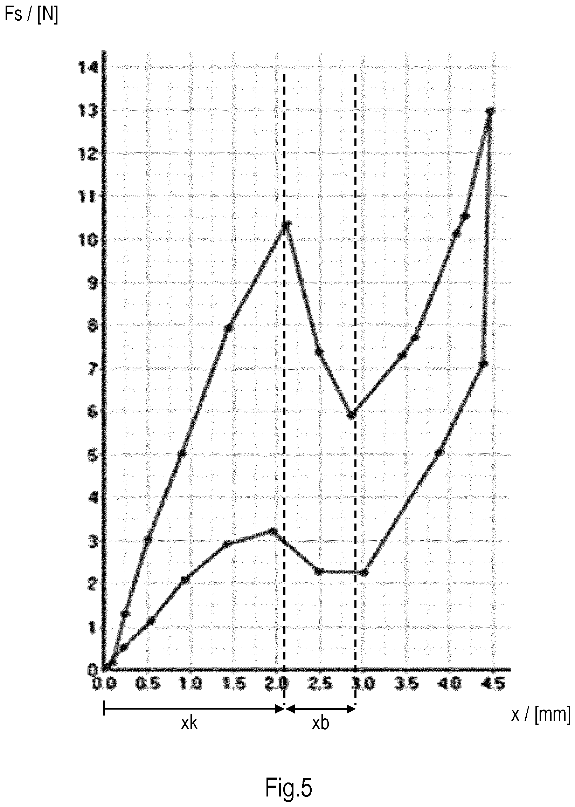

Figur 5 zeigt einen Kraftverlauf einer durch das Federblatt 10 erzeugten Gegenkraft bei Eindrücken des Druckknopfs 6 bzw. bei entsprechender Bewegung des Bewegungsübertragers 8 nach hinten, und zwar als Auftragung der Federkraft Fs gegen eine Bewegungsstrecke x des Bewegungsübertragers 8. Zu Beginn des Eindrückens steigt die Federkraft Fs zunächst zumindest ungefähr linear an, um folgend auf ein Erreichen der vorgegebenen Bewegungsstrecke xk innerhalb eines Knickbereichs xb abzufallen. Nach Durchschreiten des Knickbereichs xb steigt die Federkraft Fs zumindest ungefähr linear wieder an. Der Knickbereich xb weist in der Regel eine Breite von Δx [0,5 mm; 1 mm] auf. Die vorgegebene Bewegungsstrecke xk entspricht dem Beginn des Knickbereichs xb.

Durch diesen Kraftabfall innerhalb des Knickbereichs xb kann einem Nutzer, welcher den Druckknopf 6 eindrückt eine haptisch gut erfassbare Rückmeldung darüber gegeben werden, dass der Eindrückvorgang erfolgreich verläuft.

Der Kraftverlauf, insbesondere ein Niveau der Federkraft, die vorgegebene Bewegungsstrecke xk, die Breite des Knickbereichs xb sowie die Stärke des Kraftabfalls im Knickbereich xb, lässt sich durch Wahl des Materials und einer Geometrie des Federblatts 10 sowie einer Geometrie des Bewegungsübertragers 8 sehr genau einstellen und einfach variieren.

Bei Loslassen des Druckknopfs 6 kann dieser Kraftverlauf in umgekehrte Richtung durchlaufen werden, ggf. auf geringerem Kraftniveau.

Der Beitrag bzw. das Verhalten der Federarme 15 bis 17 zum Kraftverlauf wird im Folgenden genauer beschrieben:

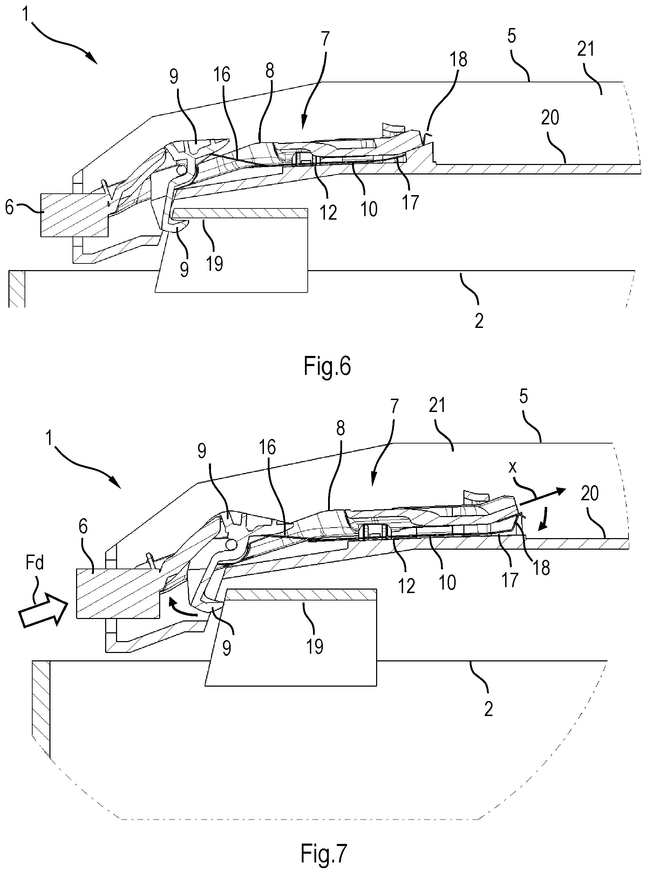

Figur 6 zeigt als Schnittdarstellung in Seitenansicht auf die Fläche A-A das Fahrzeugfach 1 mit geschlossenem Deckel 5 im unbetätigten Zustand. Der Druckknopf 6 ist nicht eingedrückt (x = 0 mm), so dass der Haken 9 eine Aufnahme 19 in dem Korpus 2 hintergreift, wodurch ein Öffnen des Deckels 5 verhindert wird.

Die Blattfeder 10 liegt mit dem zentralen Bereich 12 flach auf einer Unterseite 20 eines in dem Deckel 5 gebildeten Hohlraums 21 auf. Der Bewegungsübertrager 8 überdeckt die Blattfeder 10 so, dass die seitlichen Federarme 15 außerhalb des Bewegungsübertragers 8 liegen und diesen mit ihren (hier: für eine bessere Gleiteigenschaft gebogenen) Enden an einem hinteren Rand bzw. in Eindrückrichtung kontaktieren. Die Federarme 15 können im unbetätigten Zustand des Deckels 5 entspannt sein oder unter einer geringen elastischen Spannung stehen.

Der Federarm 16 ragt unter den Haken 9 und kann im unbetätigten Zustand des Deckels 5 entspannt sein oder unter einer geringen elastischen Spannung stehen.

Ein Vorsprungsbereich 22 des Bewegungsübertragers 8 liegt auf dem Federarm 17 auf, und zwar so, dass dessen Endbereich 18 im unbetätigten Zustand des Deckels 5 nicht überdeckt wird. Vielmehr kann der Bewegungsübertrager 8 auf einer Oberseite des Federarms 17 gleiten. Auch ist der Federarm 17 weiterhin nach oben gebogen. Insbesondere kann eine hintere Kante des Vorsprungsbereichs 22 am Übergang zum Endbereich 18 aufliegen.

Figur 7 zeigt als Schnittdarstellung in Seitenansicht auf die Fläche A-A das Fahrzeugfach 1 mit geschlossenem Deckel 5, wenn aber bereits eine Eindrückkraft Fd auf den Druckknopf 6 ausgeübt wird, wodurch dieser teilweise eingedrückt ist (0 mm < x < 2 mm). Durch die Aufbringung der Eindrückkraft Fd wird der Druckknopf 6 nach hinten bzw. in Richtung des Hohlraums 21 des Deckels 5 bewegt und verschiebt dadurch den Bewegungsübertrager 8 nach hinten. Die Bewegungsrichtungen können parallel sein, alternativ kann der Bewegungsübertrager 8 leicht angewinkelt zu dem Druckknopf 6 bewegt werden.

Durch die Verschiebung des Bewegungsübertragers 8 nach hinten werden die beiden Federarme 15 gebogen, so dass diese mit steigender Verschiebung eine zumindest ungefähr lineare Gegenkraft erzeugen, die einen Anteil an der gesamten Federkraft Fs stellt.

Außerdem wird der Federarm 17 dadurch elastisch nach unten gedrückt, weil der Bewegungsübertrager 8 auf dem Endbereich 18 gleitet. Dadurch erfährt der Bewegungsübertrager 8 mit steigender Verschiebung auch durch den Federarm 17 eine zumindest ungefähr lineare Gegenkraft, die einen weiteren Anteil an der gesamten Federkraft Fs stellt, da durch Kraftumlenkung an der Kontaktfläche zwischen Bewegungsübertrager 8 und Endbereich 18 durch den elastisch ausgelenkten Federarm 17 eine der Bewegung des Bewegungsübertragers 8 entgegengesetzte Gegenkraft erzeugt wird. Dieser Gegenkraftanteil wird so lange erzeugt, wie der Bewegungsübertrager 8 auf dem hochstehenden Endbereich 18 gleitet,

Durch die Verschiebung des Bewegungsübertragers 8 wird ferner der Haken 9 so gedreht, dass er eine Ausgriffsbewegung zum Ausgriff aus der Aufnahme 19 vollführt. Durch diese Drehbewegung wird der an der Unterseite des Hakens 9 aufliegende Federarm 16 nach unten gedrückt, wodurch noch ein weiterer merklicher Anteil an der gesamten Federkraft Fs erzeugt werden kann.

Durch alle beteiligten Federarme 15 bis 17 werden also zumindest ungefähr lineare Anteile der der Bewegung des Bewegungsübertragers 8 entgegengesetzten Federkraft Fs erzeugt, welche dann auch insgesamt eine zumindest ungefähr lineare Federcharakteristik aufweist. Dies gilt so lange, wie der Bewegungsübertrager 8 das Ende des Federarms 17 bzw. des zugehörigen Endbereichs 18 noch nicht erreicht hat.

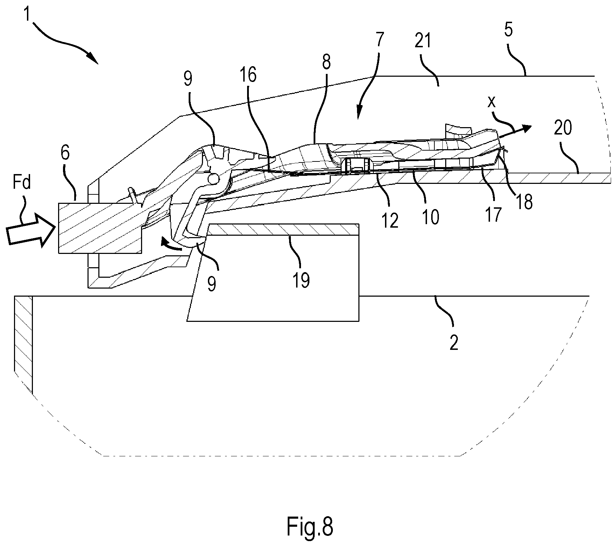

Figur 8 zeigt als Schnittdarstellung in Seitenansicht auf die Fläche A-A das Fahrzeugfach 1 mit geschlossenem Deckel 5, wobei der Bewegungsübertrager 8 nun das Ende des Federarms 17 gerade erreicht hat (x = 2 mm) und dadurch der Federarm 17 nicht mehr im Bewegungspfad des Bewegungsübertragers 8 liegt, sondern unter den Bewegungsübertrager 8 abgetaucht ist. Dadurch wiederum wird durch den Federarm 17 keine der Bewegung des Bewegungsübertragers 8 entgegengesetzte Federkraft Fs mehr ausgeübt. Dies macht sich in Bezug auf die Federkraft Fs dadurch bemerkbar, dass sie mit Erreichen des Endes des Federarms 17 bzw. des zugehörigen Endbereichs 18 für einen gewisse weitere Bewegungsstrecke (den Knickbereich xb von ca. 1 mm) absinkt, da der Federarm 17 nun nicht mehr zur Rückstellung beiträgt. Der Knickbereich xb auf Basis rein theoretischer Überlegungen ein Punkt, ist jedoch in der Praxis ein Bereich mit einer typischen Breite zwischen 0,5 mm und 1 mm.

In einer Weiterbildung kann der Federarm 17 mit Erreichen des Knickbereichs xb nach unten (vom Bewegungsübertrager 8 weg) abknicken und in der geknickten Stelle so lange verbleiben, wie der Bewegungsübertrager 8 von oben auf den freien / oberen Rand des Endbereichs 18 drückt.

Die durch die Federarme 15 und 16 beigetragenen Kraftanteile bleiben hingegen bestehen, so dass nach dem Kraftabfall bei Durchlaufen des Knickbereichs xb die Federkraft Fs wieder ansteigt, und zwar zumindest ungefähr linear. Der Haken 9 befindet sich nun so weit in Ausgriff mit der Aufnahme 19, dass der Deckel 5 durch Verschwenkung gegen der Korpus 2 geöffnet werden kann.

Es ist eine Weiterbildung, dass der Haken 9 sich mit oder nach Durchlaufen des Knickbereichs xb in Ausgriff mit dem Korpus 2 befindet.

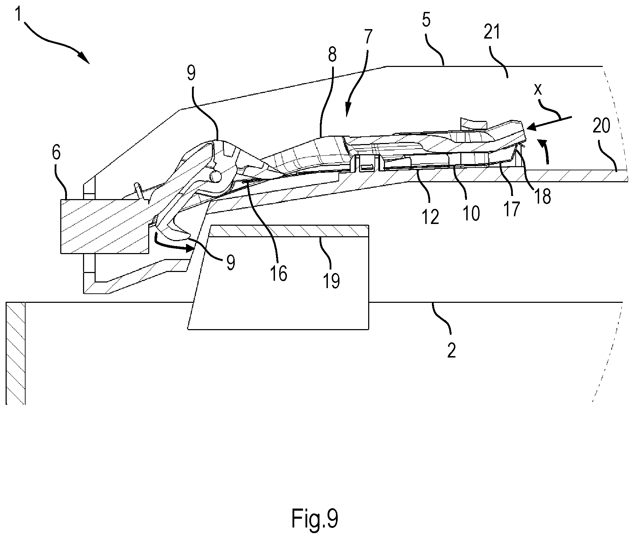

Figur 9 zeigt als Schnittdarstellung in Seitenansicht auf die Fläche A-A das Fahrzeugfach 1 mit geschlossenem Deckel 5, wobei nun die Eindrückkraft Fd nicht mehr auf den Druckknopf 6 aufgebracht wird. Die Federarme 15 drängen den Bewegungsübertrager 8 nun wieder nach vorne in seine Ruhestellung, und der Federarm 16 dreht den Haken 9 zurück in Eingriff mit der Aufnahme 19. Sobald der Bewegungsübertrager 8 wieder über die freie Kante des Endbereichs 18 des Federarms 17 zurückgeglitten ist, wird der Bewegungsübertrager 8 zusätzlich durch den Federarm 17 in seine Ruhestellung zurückgedrückt.

Die Figuren sind lediglich schematische Darstellungen und dienen nur der Erläuterung der Erfindung. Gleiche oder gleichwirkende Elemente sind durchgängig mit den gleichen Bezugszeichen versehen.

### BEZUGSZEICHENLISTE

- 1: Fahrzeugfach
- 2: Korpus
- 3: Lagerfach
- 4: Beschickungsöffnung
- 5: Deckel
- 6: Druckknopf
- 7: Verriegelungsmechanismus
- 8: Bewegungsübertrager
- 9: Haken
- 10: Federblatt
- 11: Aufprallelement
- 12: Zentraler Bereich des Federblatts
- 13: Fixierungsöffnung
- 14: Lasche
- 15: Seitlich abgehender Federarm
- 16: Vorderseitiger Federarm
- 17: Rückwärtiger Federarm
- 18: Endbereich
- 19: Hakenaufnahme
- 20: Unterseite
- 21: Hohlraum
- 22: Vorsprungsbereich
- Fd: Eindrückkraft
- Fs: Federkraft
- x: Bewegungsstrecke
- xb: Knickbereich
- xk: Vorgegebene Bewegungsstrecke

## Patentansprüche

1. Fahrzeugfach (1) mit einer Beschickungsöffnung (4), die mittels einer beweglichen Abdeckung (5) abdeckbar ist, und mit einem manuell betätigbaren Verriegelungsmechanismus (7) zur Verriegelung der Abdeckung (5) in ihrer die Beschickungsöffnung (4) abdeckenden Schließposition, wobei
- der Verriegelungsmechanismus (7) einen beweglichen Druckknopf (6), ein durch den Druckknopf (6) verschiebbares Bewegungsübertragungselement (8), ein durch Verschiebung des Bewegungsübertragungselements (8) entriegelbares Verriegelungselement (9) und ein elastisches Rückstellelement (10) aufweist,
- das elastische Rückstellelement (10) mindestens zwei Federarme (15, 17) aufweist, von denen mindestens ein erster Federarm (15) bei Bewegung des Bewegungsübertragungselements (8) ausschließlich linear auslenkbar ist und von denen mindestens ein zweiter Federarm (17) so ausgestaltet ist, dass
- das Bewegungsübertragungselement (8) bei Bewegung aus seiner Ruhestellung zunächst auf dem mindestens einen zweiten Federarm (17) unter dessen linearer Auslenkung gleitet und mit Erreichen einer vorgegebenen Bewegungsstrecke (xk) über den mindestens einen zweiten Federarm (17) hinweggleitet.

2. Fahrzeugfach nach Anspruch 1, wobei das elastische Rückstellelement (10) in Bezug auf die Bewegungsrichtung des Bewegungsübertragungselements (8) zwei seitlich svorstehende erste Federelemente (15) aufweist.

3. Fahrzeugfach nach einem der vorhergehenden Ansprüche, wobei der mindestens eine zweite Federarm (17) einen bei Einschubbewegung in Bewegungsrichtung vorstehenden Federarm (17) aufweist, der an seinem freien Ende einen in Bezug auf die Bewegungsrichtung unter einem stumpfen Winkel schräg vorstehenden Endbereich (18) aufweist, wobei das Bewegungsübertragungselement (8) bis zum Erreichen der vorgegebenen Bewegungsstrecke (xk) auf dem Endbereich (18) gleitet und ab Erreichen der vorgegebenen Bewegungsstrecke (xk) über den Endbereich (18) hinweggleitet.

4. Fahrzeugfach nach Anspruch 3, wobei der zweite Federarm (17) im Ruhezustand in Richtung des Endbereichs (18) hochgebogen ist.

5. Fahrzeugfach nach einem der vorhergehenden Ansprüche, wobei das elastische Rückstellelement (10) mindestens einen dritten Federarm (16) aufweist, der das Verriegelungselement (9) kontaktiert und dazu vorgesehen ist, mit Entriegelung des Verriegelungselements (9) durch dieses ausgelenkt zu werden und dann das Verriegelungselement (9) zurück in seine Ruhestellung zu drängen.

6. Fahrzeugfach (1) nach einem der vorhergehenden Ansprüche, wobei das Rückstellelement einen zentralen Bereich (12) aufweist, von dem die Federarme (15-17) abgehen.

7. Fahrzeugfach (1) nach Anspruch 5, wobei der zentrale Bereich (12) eine Fixierungsöffnung (13) zur Befestigung des Rückstellelements (10) aufweist.

8. Fahrzeugfach (1) nach einem der vorhergehenden Ansprüche, wobei das Federelement (9) aus einem Metallblech einstückig hergestellt ist.

9. Fahrzeugfach (1) nach einem der vorhergehenden Ansprüche, wobei der Druckknopf (12) und das Bewegungsübertragungselement (8) separat hergestellte Komponenten sind, deren Bewegungsrichtungen zumindest ungefähr übereinstimmen.

10. Verfahren zum Öffnen einer an einem Fahrzeugfach (1) nach einem der vorhergehenden Ansprüchen lösbar verriegelbaren Abdeckung (5), bei dem
- ein Druckknopf (6) durch äußere Kraftaufbringung (Fd) aus seiner Ruhestellung bewegt wird und dadurch ein Bewegungsübertragungselement (8) verschiebt,
- durch die Verschiebung des Bewegungsübertragungselements (8) mindestens ein erster elastischer Federarm (15) eines Rückstellelements linear ausgelenkt wird und ein Verriegelungselement (10) in eine Entriegelungsstellung bewegt wird,
und bei dem
- durch die Bewegung des Bewegungsübertragungselements (8) mindestens ein zweiter Federarm (17) bis zum Erreichen einer vorgegebenen Bewegungsstrecke (xk) des Bewegungsübertragungselements (8) von seiner Ruhestellung aus linear ausgelenkt und mit Erreichen der vorgegebenen Bewegungsstrecke (xk) überglitten wird.

## Claims

1. Vehicle compartment (1) having a loading opening (4) which can be covered by means of a movable cover (5), and having a manually operable locking mechanism (7) for locking the cover (5) in its closed position covering the loading opening (4), wherein
- the locking mechanism (7) has a movable pushbutton (6), a movement transmission element (8) that can be displaced by the pushbutton (6), a locking element (9) that can be unlocked by displacing the movement transmission element (8), and an elastic restoring element (10),
- the elastic restoring element (10) has at least two spring arms (15, 17), of which at least one first spring arm (15) can be deflected exclusively linearly during the movement of the movement transmission element (8), and of which at least one second spring arm (17) is configured such that
- when moved from its rest position, the movement transmission element (8) firstly slides on the at least one second spring arm (17) under its linear deflection and, when a predefined movement distance (xk) is reached, slides over the at least one second spring arm (17).

2. Vehicle compartment according to Claim 1, wherein the elastic restoring element (10) has two first spring elements (15) projecting laterally in relation to the direction of movement of the movement transmission element (8).

3. Vehicle compartment according to one of the preceding claims, wherein the at least one second spring arm (17) has a spring arm (17) which protrudes in the direction of movement during a pushing-in movement and which, at its free end, has an end region (18) which protrudes obliquely at an obtuse angle in relation to the direction of movement, wherein the movement transmission element (8) slides on the end region (18) until the predefined movement distance (xk) is reached and slides over the end region (18) when the predefined movement distance (xk) is reached.

4. Vehicle compartment according to Claim 3, wherein, in the rest state, the second spring arm (17) is bent upwards in the direction of the end region (18).

5. Vehicle compartment according to one of the preceding claims, wherein the elastic restoring element (18) has at least one third spring arm (16), which contacts the locking element (9) and is provided to be deflected by the locking element (9) when the latter is unlocked and then to force the locking element (9) back into its rest position.

6. Vehicle compartment (1) according to one of the preceding claims, wherein the restoring element has a central region (12), from which the spring arms (15-17) extend.

7. Vehicle compartment (1) according to Claim 5, wherein the central region (12) has a fixing opening (13) for fixing the restoring element (10).

8. Vehicle compartment (1) according to one of the preceding claims, wherein the spring element (9) is produced in one piece from a metal sheet.

9. Vehicle compartment (1) according to one of the preceding claims, wherein the pushbutton (12) and the movement transmission element (8) are separately produced components, of which the directions of movement at least approximately coincide.

10. Method for opening a detachably lockable cover (5) on a vehicle compartment (1) according to one of the preceding claims, in which
- a pushbutton (6) is moved out of its rest position by the external application of force (Fd) and displaces a movement transmission element (8) as a result,
- as a result of the displacement of the movement transmission element (8), at least one first elastic spring arm (15) of a restoring element is deflected linearly and a locking element (10) is moved into an unlocked position,
and in which
- as a result of the movement of the movement transmission element (8), at least one second spring arm (17) is deflected linearly from its rest position until a predefined movement distance (xk) is reached and is slid over when the predefined movement distance (xk) is reached.

## Revendications

1. Compartiment de véhicule (1) avec une ouverture de chargement (4), qui peut être couverte au moyen d'un couvercle mobile (5), et avec un mécanisme de verrouillage (7) actionnable manuellement pour verrouiller le couvercle (5) dans sa position de fermeture couvrant l'ouverture de chargement (4), dans lequel
- le mécanisme de verrouillage (7) présente un bouton-poussoir mobile (6), un élément de transmission de mouvement (8) pouvant être déplacé par le bouton-poussoir (6), un élément de verrouillage (9) pouvant être déverrouillé par déplacement de l'élément de transmission de mouvement (8) et un élément de rappel élastique (10),
- l'élément de rappel élastique (10) présente au moins deux bras de ressort (15, 17), dont au moins un premier bras de ressort (15) peut être dévié exclusivement linéairement lors du mouvement de l'élément de transmission de mouvement (8) et dont au moins un deuxième bras de ressort (17) est configuré de telle sorte, que
- l'élément de transmission de mouvement (8), lors du déplacement hors de sa position de repos, glisse d'abord sur l'au moins un deuxième bras de ressort (17) en déviant linéairement celui-ci et, lors de l'atteinte d'une distance de mouvement prédéfinie (xk), surmonte par glissement l'au moins un deuxième bras de ressort (17).

2. Compartiment de véhicule selon la revendication 1, dans lequel l'élément de rappel élastique (10) présente deux premiers éléments de ressort (15) faisant saillie latéralement par rapport à la direction de mouvement de l'élément de transmission de mouvement (8).

3. Compartiment de véhicule selon l'une quelconque des revendications précédentes, dans lequel l'au moins un deuxième bras de ressort (17) présente un bras de ressort (17) faisant saillie dans la direction de mouvement lors du mouvement d'insertion, qui présente à son extrémité libre une zone d'extrémité (18) faisant saillie obliquement par rapport à la direction de mouvement selon un angle obtus, l'élément de transmission de mouvement (8) glissant sur la zone d'extrémité (18) jusqu'à l'atteinte de la distance de mouvement prédéfinie (xk) et surmontant par glissement la zone d'extrémité (18) à partir de l'atteinte de la distance de mouvement prédéfinie (xk).

4. Compartiment de véhicule selon la revendication 3, dans lequel le deuxième bras de ressort (17) est plié vers le haut en direction de la zone d'extrémité (18) à l'état de repos.

5. Compartiment de véhicule selon l'une quelconque des revendications précédentes, dans lequel l'élément de rappel élastique (10) présente au moins un troisième bras de ressort (16) qui est en contact avec l'élément de verrouillage (9) et qui est prévu pour être dévié par l'élément de verrouillage (9) lors du déverrouillage de celui-ci, puis pour repousser l'élément de verrouillage (9) vers sa position de repos.

6. Compartiment de véhicule (1) selon l'une quelconque des revendications précédentes, dans lequel l'élément de rappel présente une zone centrale (12) à partir de laquelle les bras de ressort (15-17) s'étendent.

7. Compartiment de véhicule (1) selon la revendication 5, dans lequel la zone centrale (12) présente une ouverture de fixation (13) pour la fixation de l'élément de rappel (10).

8. Compartiment de véhicule (1) selon l'une quelconque des revendications précédentes, dans lequel l'élément de ressort (9) est fabriqué en une seule pièce à partir d'une tôle métallique.

9. Compartiment de véhicule (1) selon l'une quelconque des revendications précédentes, dans lequel le bouton-poussoir (12) et l'élément de transmission de mouvement (8) sont des composants fabriquées séparément, dont les directions de mouvement coïncident au moins approximativement.

10. Procédé d'ouverture d'un couvercle (5) verrouillable de manière amovible sur un compartiment de véhicule (1) selon l'une quelconque des revendications précédentes, dans lequel
- un bouton-poussoir (6) est déplacé hors de sa position de repos par application de force extérieure (Fd) et déplace ainsi un élément de transmission de mouvement (8),
- au moins un premier bras de ressort élastique (15) d'un élément de rappel est dévié linéairement par le déplacement de l'élément de transmission de mouvement (8) et un élément de verrouillage (10) est déplacé dans une position de déverrouillage,
et dans lequel,
- par le mouvement de l'élément de transmission de mouvement (8), au moins un deuxième bras de ressort (17) est dévié linéairement de sa position de repos jusqu'à l'atteinte d'une distance de mouvement (xk) prédéfinie de l'élément de transmission de mouvement (8) et est surmonté par glissement lors de l'atteinte de la distance de mouvement (xk) prédéfinie.
